# EUROPEAN PATENT APPLICATION

(11) **EP 1 384 429 A1**
(43) Date of publication of application: **28.01.2004**
(21) Application number: 03010212.3
(22) Date of filing: 06.05.2003
(51) Int. Cl.: A47L 9/24, F16L 11/16, B29C 53/78

(54) **Hose for vacuum cleaner**

(30) Priority: 24.07.2002 KR 2002043526
(71) Applicant: Lee, Hyun-Mi, Haewundae-ku, Pusan-city (KR)
(72) Inventor: Lee, Hyun-Mi, Haewundae-ku, Pusan-city (KR)
(74) Representative: Weber, Joachim, Dr.

(57) **Abstract**

Disclosed is a hose (1) for a vacuum cleaner comprising synthetic resin strips (10), each of which comprises a flat portion (11), a reversed U-shaped protrusion (20) formed at an end (11a) of the flat portion (11) and having an electrical conductive wire (40) inserted therein, and a hook-shaped cover (30) integrally formed at the other end (11b) of the flat portion (11) with a predetermined space from the reversed U-shaped protrusion (20) so that the space between the protrusion (20) and the cover (30) allows smooth bending and stretching of the hose (1), wherein two adjoining strips (10, 10') are helically wound so that the reversed U-shaped protrusion (20) of one strip is overlapped with the hook-shaped cover (30) of the other strip, thereby contacting a side wall (20a) of the reversed U-shaped protrusion (20) of one strip with an inner surface (30a) of the hook-shaped cover (30), and wherein the side wall (20a) of the reversed U-shaped protrusion (20) of one strip and the inner surface (30a) of the hook-shaped cover (30) of the adjoining strip are adhered by adhesive.

## Description

### BACKGROUND OF THE INVENTION

### 1. Field of the Invention

The present invention relates to a hose for a vacuum cleaner made of flexible synthetic resin strips, each including a flat portion, a reversed U-shaped protrusion formed at an end of the flat portion, and a hook-shaped cover integrally formed at the other end of the flat portion with a predetermined space from the reverse U-shaped protrusion so that the space between the protrusion and the cover allows smooth bending and stretching of the hose, in which two adjoining strips are helically wound so that the reversed U-shaped protrusion of one strip is overlapped with the hook-shaped cover of the other strip, thereby contacting a side wall of the reversed U-shaped protrusion of one strip with an inner surface of the hook-shaped cover, and in which the side wall of the reversed U-shaped protrusion of one strip and the inner surface of the hook-shaped cover of the adjoining strip are adhered by adhesive. At this time, an electrical conductive wire is inserted into the reversed U-shaped protrusion.

### 2. Description of the Related Art

Prior art hose for a vacuum cleaner has been conventionally shaped by helically wind two synthetic resin strips in series so that adjoining margins of the strips are overlapped.

However, the conventional hose for a vacuum cleanser is not smooth in bending and stretching due to a sectional structure of the strip. In addition, the conventional hose has problems since the hose is not easily shaped, and a combining portion of the strips is relatively not durable.

Thus, the conventional hose is additionally equipped with a coiled steel wire mounted to an inner wall of the hose in order to prevent the synthetic resin hose from being deformed without preserving its origin form. This steel wire gives a role of preserving the origin form of the hose together with a function of an electric conductor.

However, such a method for mounting a steel wire in the hose has problems as follows.

Since the steel wire has a strength significantly different from that of the synthetic resin hose, the weak synthetic resin hose is easily worn out and damaged by the steel wire with a relatively great strength. In addition, if an outer appearance of the hose is deformed by the deformation of the steel wire caused by external pressure, the hose is hardly recovered into its origin form.

Thus, there is still a need of developing a hose for a vacuum cleaner which enables the hose to preserve its origin form without any additional part such as a steel wire by configuring the strip itself to have a sectional structure suitable for giving a sufficient strength, and which ensures smooth bending and stretching.

### SUMMARY OF THE INVENTION

The present invention is designed to solve the problems of the conventional hose for a vacuum cleaner, and an object of the invention is to provide a hose for a vacuum cleaner which is capable of preserving its origin form without any help of an additional part such as a steel wire and ensures smooth bending and stretching.

In order to accomplish the object, the present invention provides a hose for a vacuum cleaner comprising synthetic resin strips, each of which comprises a flat portion, a reversed U-shaped protrusion formed at an end of the flat portion and having an electrical conductive wire inserted therein, and a hook-shaped cover integrally formed at the other end of the flat portion with a predetermined space from the reversed U-shaped protrusion so that the space between the protrusion and the cover allows smooth bending and stretching of the hose, wherein two adjoining strips are helically wound so that the reversed U-shaped protrusion of one strip is overlapped with the hook-shaped cover of the other strip, thereby contacting a side wall of the reversed U-shaped protrusion of one strip with an inner surface of the hook-shaped cover, and wherein the side wall of the reversed U-shaped protrusion of one strip and the inner surface of the hook-shaped cover of the adjoining strip are adhered by adhesive.

Preferably, the reversed U-shaped protrusion is made using extrusion molding to be integrated with one end of the flat portion of the synthetic resin, and the electric conductive wire is made of a number of copper strands.

### BRIEF DESCRIPTION OF THE DRAWINGS

These and other features, aspects, and advantages of the present invention will become better understood with regard to the following description, appended claims, and accompanying drawings, in which like components are referred to by like reference numerals. In the drawings:
FIG. 1 is a front view showing a portion of a hose for a vacuum cleaner according to the present invention;
FIG. 2 is a sectional view showing a wall of the hose in which an electric wire is inserted according to the present invention;
FIG. 3 is a sectional view showing a strip having an electrical conductive wire therein according to the present invention;
FIG. 4 is a sectional view showing a strip having two electrical conductive wires therein according to the present invention; and
FIG. 5 is a sectional view showing a strip having an electrical conductive wire with a buffer layer according to the present invention.

### Detailed Description OF THE PREFERRED EMBODIMENT

Hereinafter, preferred embodiments of the present invention will be described in detail with reference to the accompanying drawings.

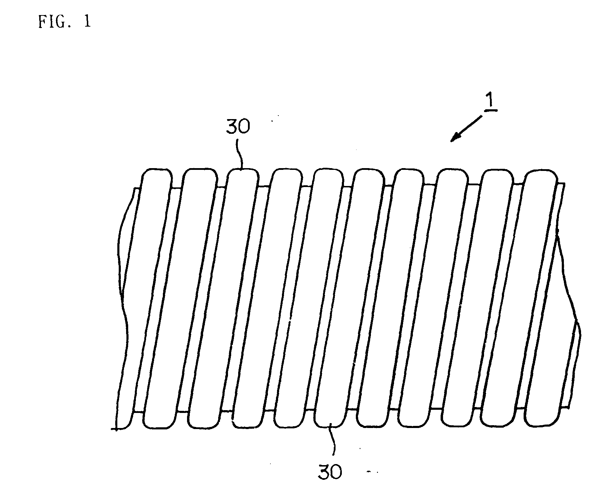

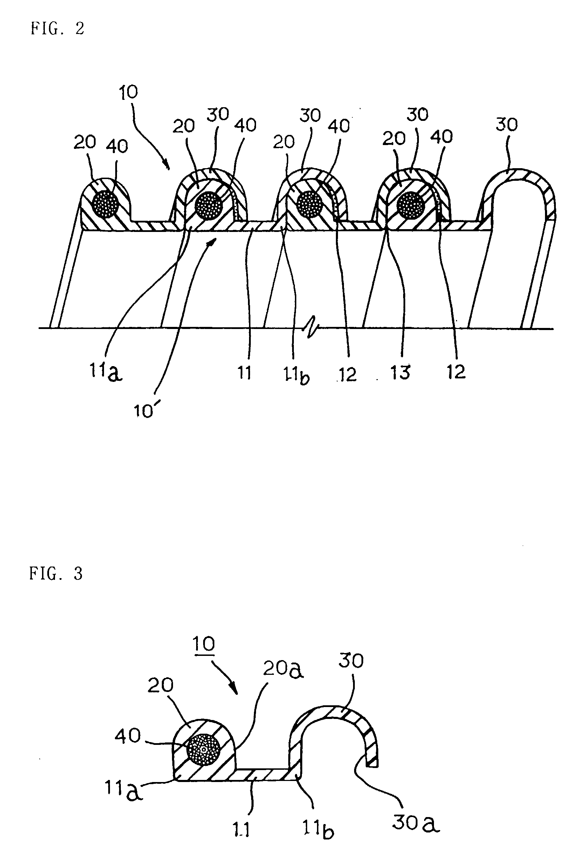

As shown in FIGs. 1 and 2, a hose 1 of the present invention includes strips 10 made of synthetic resin. The synthetic resin strip 10 has a flat portion 11, and a reserve U-shaped protrusion 20 is formed at an end 11a of the flat portion 11. An electric conductive wire 40 is mounted in the reversed U-shaped protrusion 20. At the other end 11b of the flat portion 11, a hook-shaped cover 30 is integrally formed with a predetermined space from a side of the reversed U-shaped protrusion 20. Thus, the flat portion 11 is positioned with a length corresponding to the space between the reversed U-shaped protrusion 20 and the hook-shaped cover 30 so that the hose 1 may ensure smooth bending and stretching. Two adjoining strips 10, 10' are helically wound so that the reversed U-shaped protrusion 20 of one strip is overlapped with the hook-shaped cover 30 of the other strip. This makes a side wall 20a of the reversed U-shaped protrusion 20 of one strip with an inner surface 30a of the hook-shaped cover 30 be contacted each other. The side wall 20a of the reversed U-shaped protrusion 20 of one strip and the inner surface 30a of the hook-shaped cover 30 of the adjoining strip are then adhered by using such as adhesive.

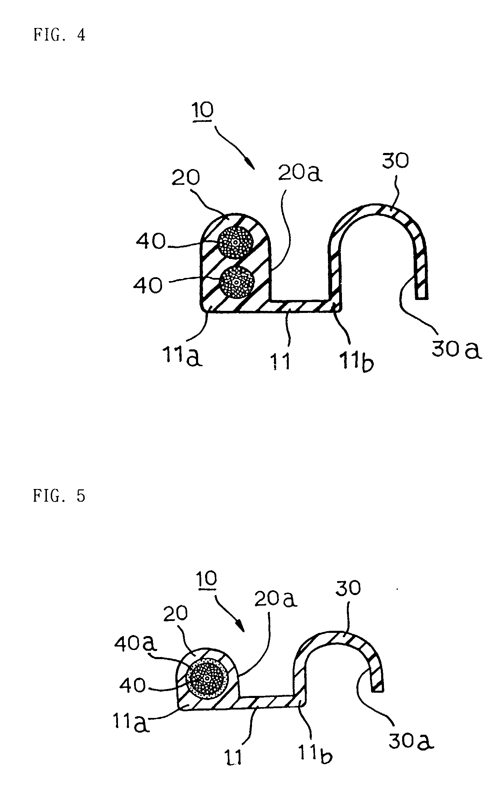

As shown in FIG. 3, the electric conductive wire 40 mounted in the reversed U-shaped protrusion 20 is preferably made of a number of copper strands. In other case, a buffer layer 40a made of buffer materials can be laid on an outer circumference of the electric conductive wire 40 made of a number of copper strands, as shown in FIG. 4.

To make the electric conductive wire 40 used in the present invention, a number of thin copper strands are loosely tied up. Therefore, the electric conductive wire 40 can be smoothly mounted inside the reversed U-shaped protrusion 20 which is helically wound to form a helical protrusion. This helps the shaping process of the hose.

In addition, since the flat portion 11 and the reversed U-shaped protrusion 20 forms a mutually integrated reinforced section, the hose may preserve its origin form very firmly.

A pair of two adjoining strips made by extrusion molding as above are combined in a way that the reversed U-shaped protrusion 20 of the first strip 10 is overlapped with the hook-shaped cover 30 of the second strip 10', and then two overlapped strips 10, 10' are helically wound to form the hose 1. Since the hose 1 has the reinforced sectional structure in which the flat portion 11 and the reversed U-shaped protrusion 20 are mutually integrated, the hose may preserve its origin form without use of any preserving unit such as a steel wire.

In addition, the flap portion 11 allows a predetermined space between the side wall 20a of the reversed U-shaped protrusion 20 and the hook-shaped cover 30. Also, between the reversed U-shaped protrusion 20 and the hook-shaped cover 30, an adhesion portion 12 is formed at a side close to a non-adhesion portion 13 formed at an opposite side. This adhesion portion 12 has a simple structure with stable adhesive strength. In addition, this adhesion structure enables the hose 1 to be smoothly bent and stretched so that the hose 1 may be conveniently used when being used for a vacuum cleaner.

Since the electric conductive wire 40 is mounted in the reversed U-shaped protrusion 20, the hose 1 may perfectly protect the electric conductive wire 40 against, for example, the moisture. In addition, since the flat portion 1 and the reversed U-shaped protrusion 20 are integrated in a sectional view and the electric conductive wire 40 is made by loosely binding a number of thin copper strands to be smoothly bent and stretched, the hose 1 can be easily shaped and have smooth bending and stretching ability.

There can be mounted one or two electric conductive wires 40 in the reversed U-shaped protrusion 20 when the strip 10 is made by extrusion molding, as shown in FIGs. 3, 4 and 5. This makes the shaping process of the strip 10 relatively easier and simpler. In addition, since the reversed U-shaped protrusion 20 receiving the electric conductive wire 40 is positioned at a side of the flat portion 11 of the strip 10 and helically wound to form a helical protrusion, the bending and stretching ability of the hose 1 is improved and an outer appearance of the hose 1 becomes more elegant.

In addition, owing to the buffer layer 40a coated around the outer circumference of the electric conductive wire 40, the strip made of the synthetic resin may obtain improved abrasion resistance, so the hose 1 may get an elongated life.

The hose for a vacuum cleaner according to the present invention has been described in detail. However, it should be understood that the detailed description and specific examples, while indicating preferred embodiments of the invention, are given by way of illustration only, since various changes and modifications within the spirit and scope of the invention will become apparent to those skilled in the art from this detailed description.

## Claims

1. A hose (1) for a vacuum cleaner comprising synthetic resin strips (10), each of which comprises a flat portion (11), a reversed U-shaped protrusion (20) formed at an end (11a) of the flat portion (11) and having an electrical conductive wire (40) inserted therein, and a hook-shaped cover (30) integrally formed at the other end (11b) of the flat portion (11) with a predetermined space from the reversed U-shaped protrusion (20) so that the space between the protrusion (20) and the cover (30) allows smooth bending and stretching of the hose (1),
wherein two adjoining strips (10, 10') are helically wound so that the reversed U-shaped protrusion (20) of one strip is overlapped with the hook-shaped cover (30) of the other strip, thereby contacting a side wall (20a) of the reversed U-shaped protrusion (20) of one strip with an inner surface (30a) of the hook-shaped cover (30), and
wherein the side wall (20a) of the reversed U-shaped protrusion (20) of one strip and the inner surface (30a) of the hook-shaped cover (30) of the adjoining strip are adhered by adhesive.

2. A hose (1) for a vacuum cleanser according to claim 1,
wherein the reversed U-shaped protrusion (20) is made using extrusion molding to be integrated with one end (11a) of the flat portion (11) of the synthetic resin (10), and the electric conductive wire (40) is made of a number of copper strands.
